# FASCICULE DE BREVET EUROPEEN

(11) **EP 4 127 410 B1**
(45) Date de publication et mention de la délivrance du brevet: **07.08.2024**
(21) Numéro de dépôt: 21722277.7
(22) Date de dépôt: 01.04.2021
(51) Int. Cl.: F01D 5/28, F01D 5/30

(54) **AUBE COMPOSITE DE TURBOMACHINE ET SON PROCEDE DE FABRICATION**
TURBOMASCHINENVERBUNDSCHAUFEL UND VERFAHREN ZUR HERSTELLUNG DAVON
TURBOMACHINE COMPOSITE BLADE AND METHOD FOR MANUFACTURING SAME

(30) Priorité: 02.04.2020 FR 2003301
(43) Date de publication de la demande: 08.02.2023
(73) Titulaire: SAFRAN AIRCRAFT ENGINES, 75015 Paris (FR)
(72) Inventeur: PERLIN, Matthieu Patrick Jean Roger, 77550 MOISSY-CRAMAYEL (FR); BROUSSAIS-COLELLA, Nicolas François Paul, 77550 MOISSY-CRAMAYEL (FR); LE CLOAREC, Damien Vincent, 77550 MOISSY-CRAMAYEL (FR); MALFROY, Ambroise Nicolas Marie, 77550 MOISSY-CRAMAYEL (FR)
(74) Mandataire: Gevers & Orès
(86) Numéro de dépôt international: PCT/FR2021/050576
(87) Numéro de publication internationale: WO 2021/198621

(56) Documents cités:
- WO-A1-2015/057369
- FR-A1- 3 049 305
- US-A- 5 935 360
- US-A1- 2015 110 636

## Description

### Domaine technique de l'invention

La présente invention concerne une aube composite de turbomachine et son procédé de fabrication.

### Arrière-plan technique

L'arrière -plan technique comprend notamment les documents US-A1-2015/110 636, US-A1-5,935,360, WO-A1-2015/057 369A1 et FR-A1-3 049 305.

L'utilisation de matériaux composites est particulièrement avantageuse dans l'industrie aéronautique car ces matériaux sont relativement légers et ont de bonnes propriétés mécaniques.

Un matériau composite classiquement utilisé pour l'aéronautique comprend une préforme fibreuse noyée dans une résine polymérique. La préforme peut être issue d'un tissage en trois dimensions ou peut être obtenue par drapage et superposition de plusieurs tissus.

La résine peut être injectée dans la préforme ou bien la préforme peut être préalablement imprégnée avec la résine.

La mise en forme de la pièce finale est en général réalisée au moyen d'un outillage comportant un moule. Dans le cas où une résine doit être injectée dans une préforme, la préforme est disposée dans la cavité d'un moule et le moule est recouvert d'un contre-moule. L'outillage comprend un port d'injection de résine dans la cavité du moule ainsi qu'un port de mise sous vide de la cavité du moule.

Dans le cas où la préforme est déjà imprégnée avec la résine, la préforme est disposée dans la cavité d'un moule qui peut être recouverte avec une bâche souple ou un contre-moule.

L'outillage comprend également un port d'injection de résine dans la cavité du moule ainsi qu'un port de mise sous vide de la cavité du moule. Le contre-moule applique une pression sur la préforme du fait de la mise sous vide de la préforme située entre le contre-moule et la bâche souple ou le moule. L'utilisation d'un contre-moule permet de mieux maîtriser l'épaisseur de la pièce finale.

Dans le cas d'une aube, en particulier de soufflante, après l'opération de moulage décrite ci-dessus, une opération de pose de bandes anti-usure sur le pied et l'échasse de l'aube doit être réalisée.

Ces bandes sont actuellement rapportées et solidarisées sur le pied et l'échasse de l'aube, par collage. Ainsi, les bandes anti-usure sont d'abord imprégnées de colle, en général phénolique, à la main. Puis, l'opérateur place, toujours manuellement, les bandes anti-usure sur le pied et l'échasse de l'aube.

L'aube revêtue des bandes anti-usure est alors replacée dans le moule et les bandes d'usure sont collées sous vide en utilisant un contre-moule en silicone.

Cette opération de collage des bandes anti-usure est donc très manuelle et génère de nombreux défauts dans la pièce finale. On a ainsi constaté, en service, des décollements des bandes anti-usure mettant à nu le composite de l'aube qui devient inutilisable.

Ces décollements sont dus principalement à un mauvais taux d'encollage des bandes anti-usure. Or, le taux d'encollage approprié nécessite de peser la quantité de colle au dixième de gramme près et est pratiquement impossible à respecter lorsqu'il est effectué manuellement.

De plus, la façon de répartir la colle sur les bandes anti-usure a une influence directe sur la qualité du collage : la moindre zone mal imprégnée entraine un mauvais collage.

La quantité de colle génère également des non conformités dimensionnelles : la quantité de colle influence directement l'épaisseur finale des bandes anti-usure sur l'aube.

Ainsi, si les bandes sont trop imprégnées ou la colle mal répartie, les différences de planéité et les dimensions, en particulier du pied de l'aube, sortent des tolérances et l'aube devient non conforme.

Or, les bandes anti-usure sont fournies à l'état sec avec des variations d'épaisseur qui ne permettent pas de standardiser la quantité de colle à y intégrer : un bon collage pour une bande anti-usure moins épaisse nécessite une plus faible quantité de colle que pour une bande anti-usure plus épaisse. Par ailleurs, on l'a vu, les bandes anti-usure sont collées sous vide en utilisant un contre-moule en silicone qui, n'épousant pas parfaitement certaines géométries de l'aube de soufflante, génère en certains points des accumulations de colle.

Ces accumulations de colle génèrent à leur tour des surépaisseurs et des non-conformités dimensionnelles de l'aube de soufflante.

Une autre difficulté rencontrée avec le procédé actuel de collage des bandes anti-usure sur l'aube est la difficulté de positionnement, à plusieurs dizaines de millimètres près, des bandes, à la main, sur une forme gauche et la difficulté de maintenir ce positionnement des bandes pendant l'opération d'installation de l'aube revêtue des bandes anti-usure dans le moule et pendant l'opération de collage sous vide.

Par ailleurs, une fois collées, les bandes anti-usure servent de référence dimensionnelle pour l'aube. Ainsi, les différentes qualités de collage peuvent entraîner des problèmes en service ou impacter négativement la géométrie finale de la pièce.

La présente invention concerne la technologie précitée de fabrication d'une aube composite sur une surface de laquelle au moins une bande anti-usure de tissu est à solidariser, avec un positionnement précis et des dimensions précises à respecter.

La présente invention propose un perfectionnement à cette technologie, qui est simple, efficace et économique.

### Résumé de l'invention

L'invention concerne une aube de turbomachine, cette aube étant en matériau composite formé de fibres tissées et noyées dans une résine polymérisée, cette aube comportant un pied relié par une échasse à une pale qui comprend un intrados et un extrados, au moins une bande anti-usure de tissu étant située sur une surface du pied et/ou de l'échasse, caractérisée en ce que la au moins une bande anti-usure est solidarisée à la surface du pied de façon unitaire à celle-ci par ladite résine.

L'invention permet notamment de positionner précisément la ou les bandes anti-usure sur l'aube. Par ailleurs, elle permet de solidariser la ou les bandes sur l'aube sans apport de colle, la résine utilisée pour fabriquer la pale étant utilisée pour réaliser cette solidarisation.

L'aube selon l'invention peut comprendre une ou plusieurs des caractéristiques suivantes, prises isolément les unes des autres, ou en combinaison les unes avec les autres :
- l'aube comprend au moins une, et de préférence deux, bande(s) anti-usure, sur une première surface du pied et/ou de l'échasse située du côté dudit intrados, et au moins une, et de préférence deux, bande(s) anti-usure, sur une seconde surface du pied et/ou de l'échasse située du côté dudit extrados ;
- la au moins une bande anti-usure a une forme allongée et s'étend sensiblement d'une extrémité du pied située du côté d'un bord d'attaque de la pale, à une extrémité opposée du pied située du côté d'un bord de fuite de la pale ;
- la au moins une bande est formée par tissage de fibres en PTFE et/ou aramide ;
- la au moins une bande a une épaisseur qui varie sur sa longueur.

La présente invention concerne également un procédé de fabrication d'une aube telle que décrite ci-dessus, au moyen d'un outillage comportant un moule définissant une cavité configurée pour recevoir une préforme en fibres tissées, ce procédé comprenant les étapes suivantes:
a) positionnement de la au moins une bande anti-usure sur au moins une paroi du moule débouchant dans la cavité,
b) installation de la préforme dans la cavité et sur ladite paroi, et
c) polymérisation de la résine présente sur les fibres de la préforme ou injectée dans la cavité, cette résine étant configurée pour solidifier l'aube et assurer la solidarisation de la au moins une bande anti-usure sur cette aube.

A l'étape a), la au moins une bande anti-usure est de préférence positionnée dans un évidement formé dans ladite paroi.

A l'étape c), la résine est avantageusement configurée pour imbiber la au moins une bande anti-usure.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'une aube composite selon l'invention,
[Fig.2] la figure 2 est une vue schématique à plus grande échelle d'une partie de l'aube de la figure 1, et en particulier de son pied et de son échasse sur lesquels sont situées des bandes anti-usure,
[Fig.3] la figure 3 est une vue très schématique en coupe d'un outillage de fabrication d'une aube selon l'invention, et

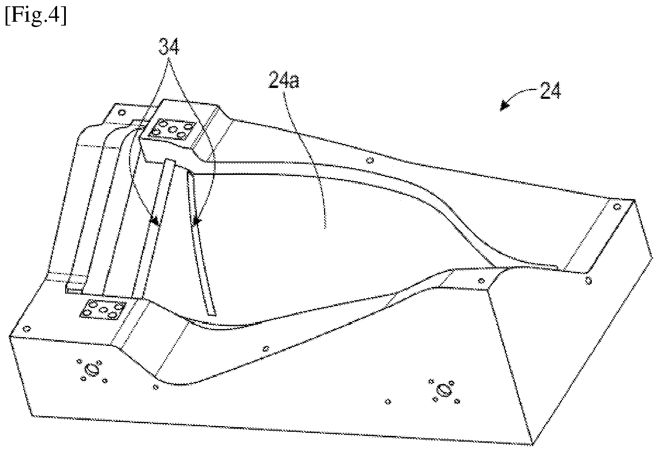

[Fig.4] la figure 4 est une vue schématique en perspective d'un mode de réalisation d'un moule d'un outillage de fabrication d'une aube selon l'invention.

### Description détaillée de l'invention

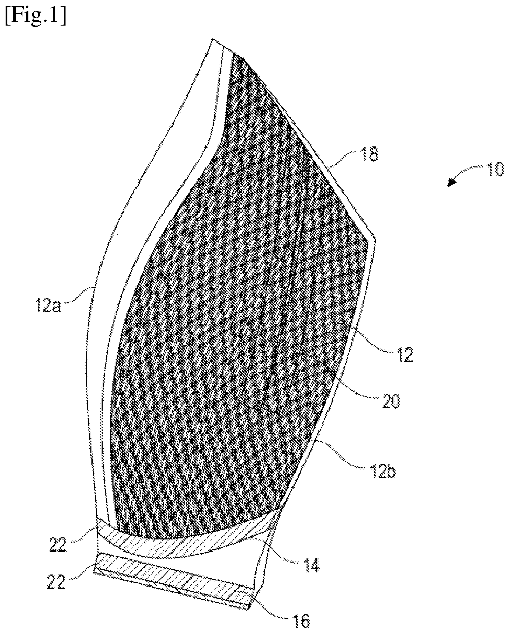

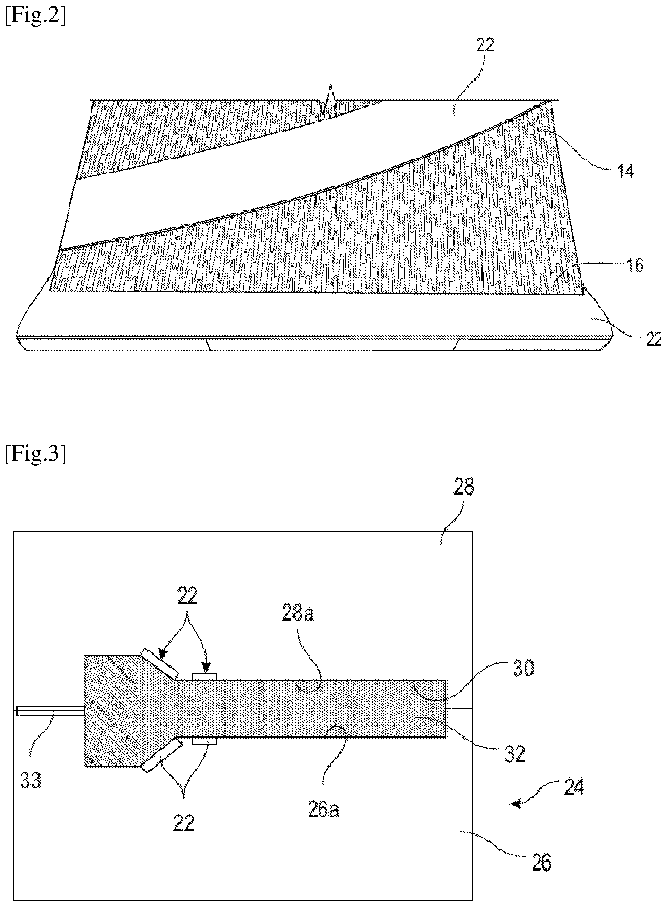

On se réfère d'abord aux figures 1 et 2 qui illustrent une aube 10 en matériau composite pour une turbomachine, cette aube 10 étant par exemple une aube de soufflante.

L'aube 10 comprend une pale 12 reliée par une échasse 14 à un pied 16 qui a par exemple une forme en queue d'aronde et est conformé pour être engagé dans une alvéole de forme complémentaire d'un disque de rotor, afin de retenir l'aube sur ce disque.

La pale 12 comprend un bord d'attaque 12a et un bord de fuite 12b des gaz qui s'écoulent dans la turbomachine. La pale 12 a un profil aérodynamique incurvé voire vrillé et comprend un intrados 18 et un extrados 20 s'étendant entre les bords d'attaque 12a et de fuite 12b.

Des bandes anti-usure 22 en tissu sont solidarisées sur l'aube 10.

Dans l'exemple représenté, l'aube 10 comprend quatre bandes anti-usure 22 à savoir deux sur chaque côté du pied 16 et deux autres sur chaque côté de l'échasse 14.

Comme leur nom l'indique, les bandes 22 sont configurées pour limiter l'usure des parois sur lesquelles elles sont solidarisées, par contact et/ou frottement. Ces bandes 22 sont situées sur le pied 16 et l'échasse 14 qui sont susceptibles de venir au contact de surfaces d'appui du disque de rotor précité.

Chaque bande 22 a une forme générale allongée et s'étend sensiblement du bord d'attaque 12a au bord de fuite 12b de l'aube 12. Une bande 22 a par exemple une longueur comprise entre 2 et 50cm, et une largeur comprise entre 2 et 7cm.

Une bande anti-usure 22 est réalisée par tissage de fibres telles que des fibres aramides et/ou en PTFE.

L'aube 10 est réalisée en matériau composite à partir d'une préforme fibreuse dont les fibres, par exemple en carbone, sont enrobées ou imprégnées de résine polymérisable et en particulier réticulable (telle qu'une résine époxy).

L'outillage utilisé pour fabriquer l'aube 10 comprend un moule et un contre-moule, le moule et le contre-moule définissant entre eux une cavité configurée pour recevoir la préforme fibreuse

Lors de la fabrication d'une aube, l'outillage est ouvert et une préforme fibreuse est disposée dans la cavité. Cette disposition peut être faite avec une préforme tissée en trois dimensions ou avec des tissus qui sont drapés et superposés dans la cavité. Cette étape peut être faite manuellement ou par l'intermédiaire d'un robot. L'outillage est ensuite fermé en fixant de manière étanche le contre-moule sur le moule.

La préforme est préimprégnée de résine ou de la résine est injectée dans le moule pour imprégner la préforme.

L'outillage est chauffé pour augmenter la température de la résine et entraîner sa polymérisation.

Après polymérisation de la résine et rigidification de l'aube, dans la technique actuelle, les bandes 22 sont collées, par exemple avec une colle phénolique, sur l'aube.

Cette opération de collage est, à l'heure actuelle, une opération entièrement manuelle qui comprend trois étapes, une étape d'enduction des bandes avec la colle, une étape positionnement des bandes, et une étape de maintien des bandes en position jusqu'à la prise de la colle.

Cette opération manuelle est la source de nombreux défauts dans la pièce finale, comme on l'a vu précédemment.

La présente invention propose de supprimer l'opération de collage manuelle et de réaliser l'assemblage des bandes 22 en même temps que l'opération de polymérisation de la résine et de rigidification de l'aube.

Le procédé de fabrication de l'aube selon l'invention permet donc de s'affranchir de l'opération de collage manuel du procédé de l'art antérieur, ce qui permet de résoudre le problème de l'obtention de pièces non conformes et, de plus d'avoir un procédé plus simple que celui actuellement utilisé

En effet, le procédé de l'invention comprend, comme dans le procédé de l'art antérieur, l'utilisation d'un outillage 24 comprenant un moule 26 et un contre-moule 28, le moule 26 et le contre-moule 28 définissant entre eux une cavité 30 configurée pour recevoir la préforme fibreuse 32 de l'aube (figure 3).

Mais, dans le procédé de l'invention, avant d'installer la préforme fibreuse 32 dans le moule, on place la ou les bandes 22 de tissu sur au moins une paroi 26a, 28a du moule 26 voire du contre-moule 28, qui débouche dans la cavité 30.

La préforme fibreuse 32 est ensuite installée entre le moule 26 et le contre-moule 28.

Comme évoqué dans ce qui précède, la préforme est préimprégnée de résine, ou de la résine est injectée à travers un port 33 dans le moule pour imprégner la préforme. L'injection de résine dans la cavité de l'outillage permet d'exercer une pression sur la préforme et d'éviter que des bulles d'air et microporosités apparaissent dans la pièce finale. La résine est ensuite polymérisée.

Dans le procédé de l'invention, on n'utilise plus deux types de résine, la résine imprégnant les fibres de la préforme et une résine ou colle pour coller les bandes mais seulement la résine, par exemple époxy.

Les défauts dus à une mauvaise quantité de colle, une surépaisseur ou un manque de colle, entre la bande 22 et l'aube, sont donc évités.

De plus, on obtient une pièce unitaire.

Pour obtenir une précision à quelques millimètres près du positionnement et du maintien en position des bandes 22, qui était également source de défauts dans le procédé de l'art antérieur, le moule 26 comprend avantageusement des logements 34 prévus pour recevoir les bandes 22.

Ces logements 34 peuvent être des évidements ou décaissages formés dans la paroi 26a, 28a débouchant dans la cavité 30. Ils sont avantageusement calibrés à l'épaisseur nominale des bandes 22, qui est par exemple comprise entre 0,1 et 1,5mm.

L'invention apporte ainsi plusieurs avantages parmi lesquels :
- la solidarisation des bandes par le biais de la résine plutôt que par le biais de colle dédiée, lors de la solidification de l'aube, permet d'avoir une géométrie parfaite et un placement précis des bandes ;
- les épaisseurs variables des bandes n'ont plus d'impact puisqu'elles sont plaquées contre des parois de l'outillage et reçues dans des logements calibrés de ces parois ;
- la quantité de résine est optimale en tout point des bandes, poussée par la pression d'injection dans l'outillage et/ou par la pression de fermeture du moule ; etc.

## Revendications

1. Aube (10) de turbomachine, cette aube étant en matériau composite formé de fibres de carbone tissées en trois dimensions et noyées dans une résine polymérisée, cette aube comportant un pied (16) relié par une échasse (14) à une pale (12) qui comprend un intrados (18) et un extrados (20), au moins une bande anti-usure (22) de tissu étant située sur une surface du pied et/ou de l'échasse, **caractérisée en ce que** la au moins une bande anti-usure est solidarisée à la surface du pied de façon unitaire à celle-ci par ladite résine, et est réalisée par tissage de fibres en PTFE et/ou aramide.

2. Aube (10) selon la revendication 1, dans laquelle elle comprend au moins une, et de préférence deux, bande(s) anti-usure (22), sur une première surface du pied (16) et/ou de l'échasse (14) située du côté dudit intrados (18), et au moins une, et de préférence deux, bande(s) anti-usure, sur une seconde surface du pied et/ou de l'échasse située du côté dudit extrados (20).

3. Aube (10) selon la revendication 1 ou 2, dans laquelle la au moins une bande anti-usure (22) a une forme allongée et s'étend sensiblement d'une extrémité du pied située du côté d'un bord d'attaque (12a) de la pale (12), à une extrémité opposée du pied située du côté d'un bord de fuite (12b) de la pale.

4. Aube (10) selon l'une des revendications précédentes, dans laquelle la au moins une bande (22) a une épaisseur qui varie sur sa longueur.

5. Procédé de fabrication d'une aube (10) selon l'une des revendications précédentes, au moyen d'un outillage (24) comportant un moule (26) définissant une cavité (30) configurée pour recevoir une préforme (32) en fibres tissées, ce procédé comprenant les étapes suivantes:
a) positionnement de la au moins une bande anti-usure (22) sur au moins une paroi (26a, 28a) du moule débouchant dans la cavité,
b) installation de la préforme dans la cavité et sur ladite paroi, et
c) polymérisation de la résine présente sur les fibres de la préforme ou injectée dans la cavité, cette résine étant configurée pour solidifier l'aube et assurer la solidarisation de la au moins une bande anti-usure sur cette aube.

6. Procédé selon la revendication précédente, dans lequel, à l'étape a), la au moins une bande anti-usure (22) est positionnée dans un évidement (34) formé dans ladite paroi (26a, 28a).

7. Procédé selon la revendication 5 ou 6, dans lequel, à l'étape c), la résine est configurée pour imbiber la au moins une bande anti-usure (22).

## Patentansprüche

1. Schaufel (10) eines Turbotriebwerks, wobei diese Schaufel aus einem Verbundmaterial besteht, das aus dreidimensional verwobenen und in einem polymerisierten Harz getauchten Kohlefasern gebildet ist, wobei diese Schaufel einen Fuß (16) umfasst, der über einen Steg (14) mit einem Blatt (12) verbunden ist, das eine Druckseite (18) und eine Saugseite (20) und mindestens eine verschleißhemmende Gewebebahn (22), die sich auf einer Fläche des Fußes und/oder des Stegs befindet, umfasst, **dadurch gekennzeichnet, dass** die mindestens eine verschleißhemmende Bahn durch das Harz fest mit der Fläche des Fußes auf einheitlicher Weise zu dieser verbunden ist und durch Weben von Fasern aus PTFE und/oder Aramid hergestellt ist.

2. Schaufel (10) nach Anspruch 1, wobei sie mindestens eine, und vorzugsweise zwei verschleißhemmende Bahn(en) (22) auf einer ersten Fläche des Fußes (16) und/oder des Stegs (14), die sich auf der Seite der Druckseite (18) befindet, und mindestens eine, und vorzugsweise zwei verschleißhemmende Bahn(en) auf einer zweiten Fläche des Fußes und/oder des Stegs, die sich auf der Seite der Saugseite (20) befindet, umfasst.

3. Schaufel (10) nach Anspruch 1 oder 2, wobei die mindestens eine verschleißhemmende Bahn (22) eine längliche Form aufweist und sich im Wesentlichen von einem Ende des Fußes, das sich auf der Seite einer Angriffskante (12a) des Blatts (12) befindet, zu einem gegenüberliegenden Ende des Fußes, das sich auf der Seite einer Abströmkante (12b) des Blatts befindet, erstreckt.

4. Schaufel (10) nach einem der vorstehenden Ansprüche, wobei die mindestens eine Bahn (22) eine Dicke aufweist, die über ihre Länge schwankt.

5. Verfahren zum Herstellen einer Schaufel (10) nach einem der vorstehenden Ansprüche mittels eines Werkzeugs (24), das eine Form (26) umfasst, die einen Hohlraum (30) definiert, der konfiguriert ist, um eine Vorform (32) aus gewobenen Fasern aufzunehmen, wobei dieses Verfahren die folgenden Schritte umfasst:
a) Positionierung der mindestens einen verschleißhemmenden Bahn (22) auf mindestens einer Wand (26a, 28a) der Form, die zu dem Hohlraum führt,
b) Installation der Vorform im Hohlraum und auf der Wand, und
c) Polymerisierung des auf den Fasern der Vorform vorhandenen oder in den Hohlraum eingespritzten Harzes, wobei dieses Harz konfiguriert ist, um die Schaufel zu verfestigen und die feste Verbindung der mindestens einen verschleißhemmenden Bahn auf dieser Schaufel zu gewährleisten.

6. Verfahren nach dem vorstehenden Anspruch, wobei im Schritt a) die mindestens eine verschleißhemmende Bahn (22) in einer in der Wand (26a, 28a) gebildeten Aussparung (34) positioniert ist.

7. Verfahren nach Anspruch 5 oder 6, wobei im Schritt c) das Harz konfiguriert ist, um die mindestens eine verschleißhemmende Bahn (22) zu durchnässen.

## Claims

1. A turbomachine vane (10), this vane being made of a composite material formed of carbon fibres woven in three-dimensions and embedded in a polymerised resin, this vane comprising a root (16) connected by a stilt (14) to a blade (12) which comprises a pressure side (18) and a suction side (20), at least one anti-wear strip (22) of fabric being located on a surface of the root and/or the stilt, **characterised in that** the at least one anti-wear strip is secured in a unitary manner to the surface of the root by said resin, and is produced by weaving PTFE and/or aramid fibres.

2. The vane (10) according to claim 1, wherein it comprises at least one, and preferably two, anti-wear strips (22), on a first surface of the root (16) and/or the stilt (14) located on the side of said pressure side (18), and at least one, and preferably two, anti-wear strips, on a second surface of the root and/or the stilt located on the side of said suction side (20).

3. The vane (10) according to claim 1 or 2, wherein the at least one anti-wear strip (22) is elongate in shape and extends substantially from one end of the root located on the side of a leading edge (12a) of the blade (12) to an opposite end of the root located on the side of a trailing edge (12b) of the blade.

4. The vane (10) according to any of the preceding claims, wherein the at least one strip (22) has a thickness that varies along its length.

5. A method for manufacturing a vane (10) according to any of the preceding claims, using a tooling (24) comprising a mould (26) defining a cavity (30) configured to receive a preform (32) of woven fibres, this method comprising the following steps:
a) positioning the at least one anti-wear strip (22) on at least one wall (26a, 28a) of the mould opening into the cavity,
b) installing the preform in the cavity and on said wall, and
c) polymerising the resin present on the fibres of the preform or injected into the cavity, this resin being configured to solidify the vane and ensure the securing of the at least one anti-wear strip to this vane.

6. The method according to the preceding claim, wherein in step a) the at least one anti-wear strip (22) is positioned in a recess (34) formed in said wall (26a, 28a).

7. The method of claim 5 or 6, wherein in step c) the resin is configured to soak the at least one anti-wear strip (22).
